# EUROPEAN PATENT APPLICATION

(11) **EP 0 621 112 A1**
(43) Date of publication of application: **26.10.1994**
(21) Application number: 93923659.2
(22) Date of filing: 28.10.1993
(51) Int. Cl.: B25J 19/00, B25J 17/02, B25J 9/10

(54) **INDUSTRIAL ROBOT HAVING JOINTS USING A HOLLOW REDUCTION GEAR**

(30) Priority: 28.10.1992 JP 290265/92; 07.10.1993 JP 251496/93
(71) Applicant: FANUC LTD., Minamitsuru-gun, Yamanashi 401-05 (JP)
(72) Inventor: NIHEI, Ryo, Fujiyoshida-shi, Yamanashi 403 (JP); IWASAKI, Kyozi, Hachioji Sunny Heights 1009, Hachioji-shi, Tokyo 193 (JP); ITO, Masatoshi, Fanuc Dai-3 Vira-karamatsu, Minamitsuru-gun, Yamanashi 401-05 (JP); OKADA, Takeshi, Fanuc Mansion Harimoni 10-306, Minamitsuru-gun, Yamanashi 401-05 (JP); TAKIKAWA, Ryuji, Fanuc Dai-3 Vira-Karamatsu, Minamitsuru-gun, Yamanashi 401-05 (JP)
(74) Representative: Otte, Peter, Dipl.-Ing.
(86) International application number: JP9301563
(87) International publication number: WO9409949

(57) **Abstract**

An industrial robot having joints (10) each having in turn a joint driving motor (MR) and a reduction gear (40), wherein when a rotational input of said motor (MR) is inputted to said reduction gear (10) via transmission mechanisms (32, 34), an reduced output is transmitted to movable elements of said joint (10), wherein said reduction gear (10) has a hollow cylindrical area (16a) about its central axis (A), wherein void areas (16b, 16c) are formed at upper and lower portions of said reduction gear (10) without structural members and components of said robot being connected to each other, and wherein said hollow cylindrical area and said void areas (16a-16c) are used for wiring and piping passages of cables (50) and hoses (52), whereby said cables and hoses are allowed to pass along said central axis (A) of said joint (10).

## Description

### Technical Field

The present invention relates to a structure of a joint of an industrial robot, and more particularly, it relates to an industrial robot provided with a joint having at least one hollow reduction gear reducing an input speed to a lower speed and transmitting rotative motion and force from a joint drive motor to a movable element of the joint, the hollow reduction gear having a central hollow space therein, to be used as a piping and wiring space for laying power transmission cables for supplying power to the front elements of the robot, signal cables for transmitting electric signals, and pipes and hoses for supplying working fluids and assist gases, to thereby reduce torsion and extension of the cables, the pipes and hoses when the movable element of the joint is driven for turning motions and to expand the range of joint motion.

### Prior ART

An industrial robot, particularly, an industrial multi-joint or articulation type robot has a robot structure including a robot base, i.e., a base element, a revolving body supported upright on the robot base via a rotary joint, a robot arm articulated to the revolving body via joint for rotating actions, a robot wrist joined by a joint to the front end of the robot arm, and an end effector, such as a robot hand, held on the robot wrist via a joint. Therefore, motors, i.e., driving sources, for driving the revolving body, the robot arm, the robot wrist, the end effector and such, i.e., movable elements, signal cables for transmitting signals for controlling the operation of the movable elements, a pipe and a hose for supplying a working fluid, such as compressed air, for operating the end effector, and, if the industrial robot is a welding robot or the like, an assist gas supply hosepipe for supplying an assist gas for welding are arranged on the robot structure of this industrial robot.

In such an industrial multi-articulated type robot, each of joints on which the revolving body, the robot arm and such is provided on its center axis with a drive unit formed by combining a drive motor and a reduction gear. Generally, wiring cables for supplying electric power to the drive motors, and hosepipes for supplying a working fluid, cooling water and an assist gas to the end effector are arranged mainly along the outer surface of the robot structure or extended on cable racks and pipe racks supported on the outer surface of the robot structure. Although there have been proposed technical ideas of forming the robot body in a hollow structure and using the internal space of the hollow robot body as a wiring and piping space, an articulated robot having joints which join the robot body and the robot arm together and the robot upper arm and the forearm together, provided with a hollow wiring and piping structure, has not been proposed.

Accordingly, each of the joints of the industrial robot, particularly, an articulated robot having a conventional structure is provided with a cable protecting device, such as a cable guide, outside the reduction gear to protect the wiring cables and the hosepipes. Therefore, the wiring cables, the hosepipes, and such are extended in spaces apart from the respective centers of turning of the joints; consequently, the turning of the movable element in the joint is limited to a narrowest possible range so that the wiring cables and the like are not subjected to excessive torsional and tensile loads, and it is functionally impossible to secure a desired amount of motion for the robot. Furthermore, since an arrangement of the wiring cables and the hosepipes is not desirable from the view point of preventing damaging and breaking the wiring cables and the hosepipes, maintenance work for changing the wiring cables and the hosepipes is necessarily required, and the use of the robot unavoidably requires such troublesome maintenance work.

Accordingly, it is an object of the present invention to provide a physical robot structure capable of avoiding the problems encountered by the conventional robot.

Another object of the present invention is to provide a joint structure, to be employed in a joint of a multi-articulation type robot, capable of increasing the working range of the robot and of protecting the wiring cables and the hosepipes of the robot.

With the foregoing object in view, the present invention provides each joint of an industrial robot, particularly; a multi-articulated type robot, with a reduction gear which receives rotative force from a joint drive motor through gear mechanisms and reduces the output speed, forms the reduction gear as a hollow reduction gear capable of providing a hollow region having a comparatively large diameter in its central part, does not dispose any members or elements in the upper and lower regions on the center axis of the hollow reduction gear to secure vacant spaces in the upper and lower regions, uses the hollow and the vacant spaces for laying wiring cables and hosepipes so that the wiring cables and hosepipes extend along the axis of rotation of the joint to avoid subjecting the wiring cables and the hosepipes to excessive torsion and tension, and expands the working range of the joint to thereby improve the robot's functions.

In accordance with the present invention, there is provided an industrial robot provided with at least one joint incorporating a hollow reduction gear therein to relatively rotatably join two structural elements of the industrial robot, which comprises:
a drive motor;
a hollow reduction gear including an input element receiving input rotative force through at least one pair of gear mechanisms from the drive motor, an output element exerting thereon an output force reduced from the input rotative force, and a vacant region prevailing around a central axis corresponding to the axis of rotation of the output element;
a connecting means for operatively connecting the input element of the hollow reduction gear to one of the two structural elements of the joint;
a different connecting means for operatively connecting the output element of the hollow reduction gear to the other of the two structural elements of the joint; and
means for defining two separate vacant spaces above and under the vacant region of the hollow reduction gear, the two separate vacant spaces being mutually communicated via the central vacant region of the reduction gear whereby the vacant region of the reduction gear and the above-mentioned two separate vacant spaces are used for wiring and piping space.

In accordance with the present invention, the vacant spaces can be secured, in addition to the vacant region of the hollow reduction gear, in regions above and below the vacant region of the hollow reduction gear because the hollow reduction gear receives rotative force through the pair of gear mechanisms, and wiring cables and pipes can be extended through the hollow and vacant regions so as to extend along the axis of turn of the joint elements. Consequently, the wiring cables and the hosepipes are not affected by the turning of the joint elements, there is no possibility that the wiring cables or the hosepipes are damaged or broken in a short operating time by torsional and tensile loads, and the ranges of turning of the joint can be increased so as to increase the operating range of the robot.

Since the work for laying the wiring cables and the hosepipes can be smoothly carried out in the robot assembling process, the cost of assembling the robot structure is reduced, the robot structure can be formed in a compact construction and the robot structure can be manufactured at a reduced cost, because devices and protective members, such as cable guides, for guiding and protecting the cables are not required.

Further, the joint is constructed in such a manner that the output element of the reduction gear thereof and the robot structural element are rotatably held by an external bearing element, and accordingly, the robot body can assume a large load externally applied thereto by the support of the external bearing element.

### Brief Description of the Drawings

The above and other objects, features and advantages of the present invention will become apparent from the ensuing description of preferred embodiments thereof with reference to the accompanying drawings wherein:
Fig. 1 is a cross-sectional view of an essential part of a joint structure embodying the present invention;
Fig. 2 is a front view of an industrial multi-articulation type robot to which a joint structure of the present invention, illustrating the operation of the robot;
Fig. 3 is a partial cross-sectional view of a joint of the present invention, in a case where the joint is accommodated between an upper arm and a fore-arm of an industrial robot;
Fig. 4 is a side elevation view of the robot taken along the line IV-IV of Fig. 3; and
Fig. 5 is a plan view of the industrial robot of Fig. 2.

### BEST MODE OF CARRYING OUT THE INVENTION

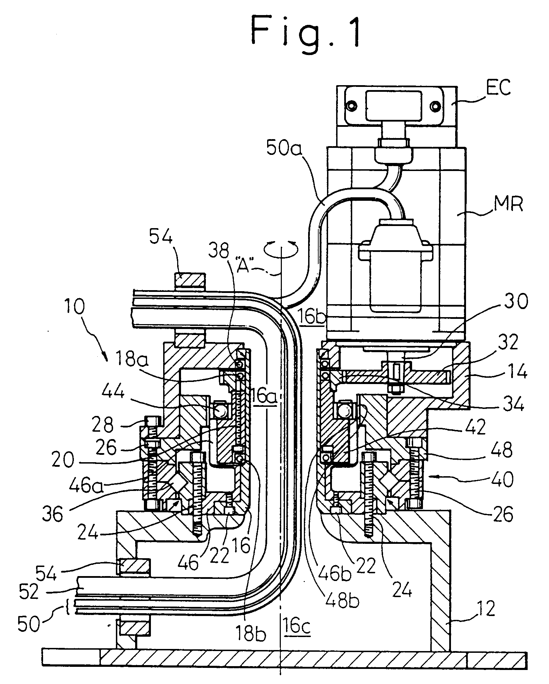

Referring to Fig. 1, a joint 10 of an industrial robot embodying the present invention constitutes a mechanical connecting assembly for providing a relative rotation between a first joint element 12 and a second joint element 14. Namely, it is possible, for example, to consider the first joint element 12 as a robot base, i.e., a fixed element, the second joint element 14 as a revolving body, i.e., a movable element, and the joint 10 as an articulation about which the fixed element and the movable element of the robot are joined together or to regard the first joint element 12 as a robot upper arm, the second joint element 14 as a revolving body and the joint 10 as an articulation about which the two movable elements are joined together.

The joint 10 having the first joint element 12 and the second joint element 14 is provided with a joint drive motor MR on the second joint element 14, and a reduction gear 40 that receives the output rotative force of the drive motor MR, reduces the output speed and drives the second joint element 14 for turning is interposed between the first joint element 12 and the second joint element 14. The joint drive motor MR is generally constituted by a servomotor provided with a rotation detector EC. The joint drive motor MR provides an output rotative force according to a control signal provided by a robot controller, not shown, on its output shaft 30. A driving gear 32 is fixedly mounted on the output shaft 30 of the drive motor MR and engages a driven gear 34 rotatably supported on a bearing 18a, such as a ball bearing or a roller bearing, on a hollow, cylindrical shaft 16 disposed at the joint of the first joint element 12 and the second joint element 14. The driven gear 34 is fastened to the input element 42 of the hollow reduction gear 40 by bolts 20, so that the output rotative force of the drive motor MR is transmitted to the input element 42 to rotate the input element 42 together with the driven gear 34 on the bearing 18a and a bearing 18b.

The rotation of the input element 42 of the reduction gear 40 is transmitted through an inner bearing 44 to the intermediate element 46 of the reduction gear 40. The intermediate element 46 is fastened to the first joint element 12 and the hollow, cylindrical shaft 16 with bolts 22 and 24. The intermediate element 46 has a flexible cylindrical part 46a formed of an elastic material and extending around the outer circumference of the hollow, cylindrical shaft 16. The flexible cylindrical part 46a is pressed radially outward through the inner bearing 44 by the input element 42.

When pressed radially outward, external splines 46b formed in the upper part of the outer circumference of the flexible cylindrical part 46a produces relative rotation of a reduced speed between the external splines 46b and internal splines 48b formed in an opposite part of the output element 48 of the reduction gear 40. In this state, an output rotative force of a reduced speed is provided on the output element 43 of the reduction gear 40 when the intermediate element 46, the hollow, cylindrical shaft 16 and the first joint element 12 are stationary. In the shown embodiment, the output rotative force of a reduced speed is transmitted to the second joint element 14 fastened to the output element 48 by bolts 26 and 28, and then the second joint element 14 turns for a joint action on a main bearing 36, such as a low-friction cross-roller bearing as shown in Fig. 1, and a bearing 38. The turning motion of the second joint element 14 occurs about a center axis "A" aligned with the center axes of the main bearing 36 coaxial with the hollow, cylindrical shaft 16, and the bearing 38; that is, the second joint element 14 is turned for a rotating joint motion about the center axis A relative to the first joint element 12 according to the output driving rotation of the drive motor MR.

The hollow reduction gear 40 can be fabricated employing the fundamental structure of the coaxial reduction gear of Harmonic Drive System Co. marketed under the registered trademark "Harmonic Drive", in which the input element 42, the intermediate element 46 and the output element 48 correspond to the wave generator, the flex spline and the circular spline, respectively, of the Harmonic Drive.

According to the present invention, the hollow, cylindrical shaft 16 disposed at the joint of the first joint element 12 and the second joint element 14 extends axially through the central hollow of the hollow reduction gear 40, and the central hollow 16a of the hollow, cylindrical shaft 16, and spaces 16b and 16c near the opposite ends of the central hollow 16a are used as spaces for laying wiring cables 50 and a hosepipe 52. Since the wiring cables 50 and the hosepipe 52 are extended along the central axis of rotation of the second joint element 14, the wiring cables 50 and the hosepipe 52 are neither twisted nor stretched when the joint turns and, consequently, the possibility that the wiring cables 50 and the hosepipe 52 are damaged or broken by the turning motion of the joint is far less than that in the conventional robot.

Further, the external main bearing 36 having a large outer diameter thereof is arranged so as to rotatably support the output element 48 of the reduction gearing 20. Therefore, the joint is durable against a large load applied thereto.

In Fig. 1, indicated at 54 are cable clamps attached to the joint elements 12 and 14, respectively, to hold the wiring cables 50 and the hosepipes 52 securely on the joint elements 12 and 14.

Naturally, a wiring cable 50a for supplying electric power to the drive motor MR and the rotation detector EC and for transmitting control signals to and from the drive motor MR and the rotation detector EC is separated from the wiring cables 50 in the vacant region 16a and the vacant spaces 16b and 16c.

In the joint 10 having the construction illustrated in Fig. 1, the first joint element 12 is a fixed element, and the second joint element 14 is a rotating element. It is also possible to use the first joint element 12 as a rotating element and to use the second joint element 14 as a fixed element when the output rotative force of the hollow reduction gear 40 at a reduced speed is extracted from the intermediate element 42 while using the output element 48 as a fixed element.

Accordingly, the joint 10 shown in Fig. 1 can be applied to any one of the joint for joining the robot base of the multi-articulated robot and the revolving body so that the latter may turn relative to the former (turning about an axis J1), the joint for joining the revolving body and the robot upper arm so that the latter may turn relative to the former (turning about an axis J2), and the joint for joining the robot upper arm and the robot forearm so that the latter may turn relative to the former (turning about an axis J3).

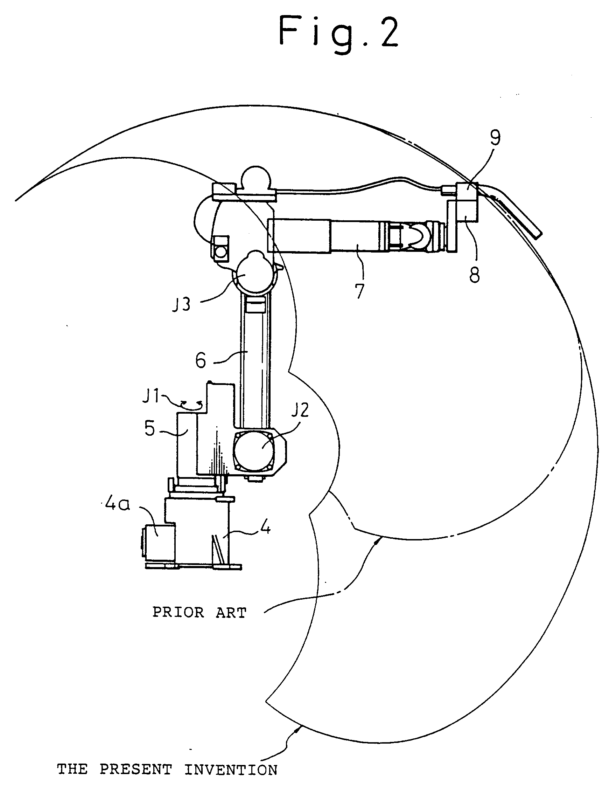

When joints similar to the joint 10 of the present invention are applied to the J2-axis joint, and the J3-axis joint J3 of the robot structure of a multi-articulated robot, the multi-articulated robot, as shown in Fig. 2, includes a robot base 4, a revolving body 5 set upright and pivotally supported on the robot base 4, a robot upper arm 6 pivotally joined to the revolving body 5 by the joint J2, a robot forearm 7 pivotally joined to the front end of the robot upper arm 6 by the joint J3, a wrist 8 mounted on the front end of the robot forearm 7, and an end effector 9, such as a welding gun, held on the wrist 8. Thus, the extremity of the end effector 9 can move in a working field defined by continuous lines far wider than a working field defined by alternate long and short dash lines in which a robot provided with the conventional joints works. The lower limit of the working field of the end effector 9 is far lower than that of the working field of the robot provided with the conventional joints. Therefore, the working performance of the robot incorporating the joint of the present invention is far superior to that of the robot provided with the conventional joints.

The reference numeral 4a in Fig. 2 designates a device through which the wiring cables and the hosepipes are inserted in the robot structure from the outside thereof.

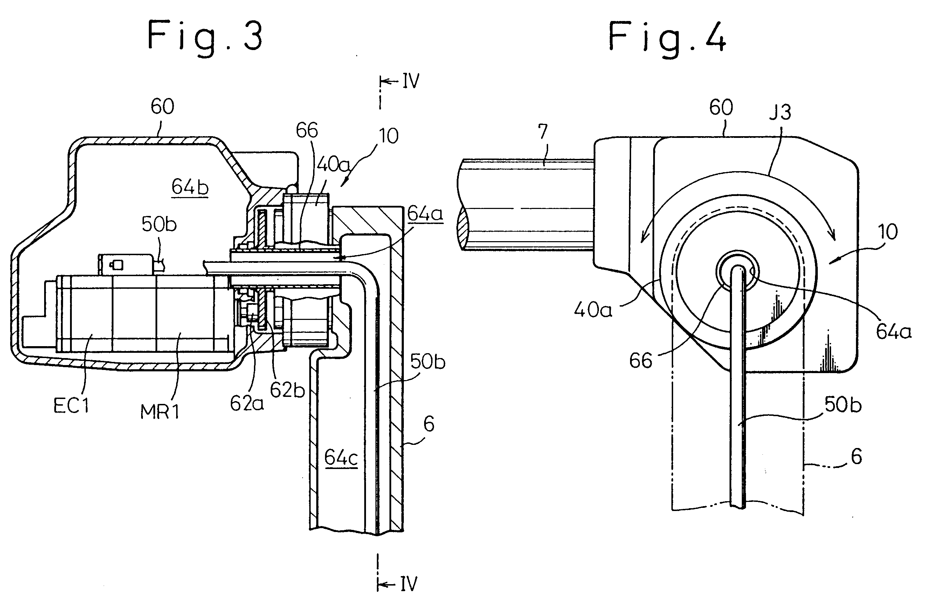

Referring to Figs. 3 and 4, an industrial robot is illustrated in which the above-described joint 10 is accommodated in the robot as a rotary joint about the J3-axis, provided between the robot upper arm 6 and the robot forearm 7.

As illustrated in Figs. 3 and 4, the joint 10 is provided with a drive motor MR1 in the form of a servo motor having an encoder EC and housed in a housing 60 provided at a rear end of the forearm 7. The rotative force of the drive motor MR1 is input into a hollow reduction gear 40a via a pair of reduction gears 62a and 62b to thereby obtain a reduced output rotation from the hollow reduction gear 40a. The reduced output rotation of the hollow reduction gear 40a is transmitted to the robot forearm 7 so as to rotate it about the J3-axis against the robot upper arm 6.

A vacant region 64a defined in the center of the hollow reduction gear 40a extends along the J3-axis so as to provide a spatial communication between a vacant space 64c of the robot upper arm 6 and a vacant space 64b of the robot forearm 7. Therefore, cables 50b laying in the vacant space 64c of the robot upper arm 6 and the vacant space 64b of the robot forearm 7 can pass through the center of the vacant region 64a of the hollow reduction gear 40a. Namely, the cables 50b extending through the center of the J3-axis are not subjected to twisting and a tension due to a relative rotation which occurs at the joint 10 between the robot upper arm 6 and the robot forearm 7.

A hollow duct 66 in Fig. 3 is a guide conduit for the cables, which duct is inserted in the vacant region 64a of the hollow reduction gear 40a.

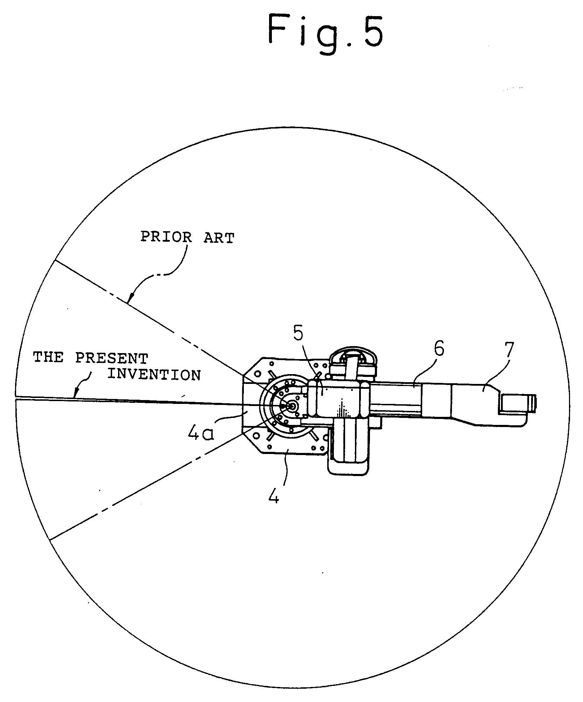

As best shown in Fig. 5, when the revolving body 5 is joined to the robot base by the joint 10 of the present invention, the radius of swing of the robot upper arm 6 and the robot forearm 7 that swing together with the revolving body 5 about the axis J1 is larger than that of the upper arm and the forearm of the robot incorporating the conventional joint structure. Thus, the performance of the end effector 9 for robot work about the J1-axis is enhanced.

As is apparent from the foregoing description, according to the present invention, a hollow reduction gear that receives the output rotative force of a joint drive motor, reduces the input speed to a lower output speed and provides an output rotative is disposed in each of the joints of an industrial robot, particularly, a multi-articulated robot, a cylindrical space having a comparatively large diameter is secured in the central part of the reduction gear, any elements or any members are not disposed in regions on the opposite ends of the cylindrical space on the center axis of the cylindrical space to secure vacant spaces in those regions, and wiring cables and hosepipes are extended through the cylindrical space and the vacant spaces along the center axis of turn. Therefore, the wiring cables, the pipes and hoses are not subjected to excessive torsion and tension, the range of action of each joint is increased, and the functional performance of the end effector of the robot for robot actions can be improved.

Further, since the hollow reduction gear of the present invention is arranged so as to be held by an external bearing means having a large diameter, the reduction gear is able to show a large mechanical durability against a large load applied to the reduction gear.

The joint for a robot, incorporating a hollow reduction gear facilitates the handling of wiring cables, pipes and hoses in assembling the robot and in carrying out maintenance work. Since the robot does not need to have any protective elements, such as cable guides, on its outer surface, the robot structure can be formed in a compact construction and can be manufactured at a reduced cost.

### The Table of Reference numerals and Characters

- 4: Robot base
- 5: Revolving body
- 6: Robot upper arm
- 7: Robot forearm
- 10: Joint structure
- 12: First joint element
- 14: Second joint element
- 16: Hollow cylindrical shaft
- 16a: Vacant region
- 16b: Vacant space
- 16c: Vacant space
- 30: Output shaft
- 32: Driving gear
- 34: Driven gear
- 36: Main bearing
- 40: Hollow reduction gear
- 50: Wiring cables
- 50a: Wiring cables
- 50b: Wiring cables
- 52: Hosepipe
- 60: Housing
- 64a: Vacant region
- 64b: Vacant space
- 64c: Vacant space
- MR: Drive motor
- MR1: Drive motor
- EC: Encoder
- EC1: Encoder

## Claims

1. An industrial robot having at least one joint incorporating a hollow reduction gear therein to relatively rotatably join two structural elements of the industrial robot, comprising:
a drive motor;
a hollow reduction gear including an input element receiving input rotative force through at least one pair of gear mechanisms from said drive motor, an output element exerting thereon an output force reduced from an input rotative force, and a vacant region prevailing around a central axis corresponding to the axis of turn of said output element;
a connecting means for operatively connecting said input element of said hollow reduction gear to one of said two structural elements of said joint;
a different connecting means for operatively connecting said output element of said hollow reduction gear to the other of said two structural elements of said joint; and
means for defining two separate vacant spaces above and under said vacant region of said hollow reduction gear, said two separate vacant spaces being mutually communicated via said central vacant region of said reduction gear whereby said vacant region of said reduction gear and the above-mentioned two separate vacant spaces are used for wiring and piping spaces.

2. An industrial robot as set forth in claim 1, wherein said one of the two structural elements of said industrial robot comprises a robot base formed as a fixed element of said robot, and wherein said other of the two structural elements of said robot comprises a revolving body of said robot.

3. An industrial robot as set forth in claim 1, wherein said one of the two structural elements comprises a revolving element of said robot, and wherein said other of the two structural elements comprises a robot upper arm.

4. An industrial robot as set forth in claim 1, wherein said one of the two structural elements comprises a robot upper arm of said robot, and wherein said other of the two structural elements comprises a robot forearm.

5. An industrial robot as set forth in claim 1, further comprises an outer bearing means for rotatably support said output element of said hollow reduction gear incorporated in said joint.

6. An industrial robot as set forth in claim 5, wherein said outer bearing means comprises an inner race member, rotating elements, and an outer race member, said outer race member being engaged with said structural element connected to said output element of said hollow reduction gear.

7. An industrial robot as set forth in claim 1, wherein said hollow reduction gear comprises a harmonic drive.
